# EUROPÄISCHE PATENTANMELDUNG

(11) **EP 0 963 924 A2**
(43) Veröffentlichungstag der Anmeldung: **15.12.1999**
(21) Anmeldenummer: 99111145.1
(22) Anmeldetag: 08.06.1999
(51) Int. Cl.: B65F 7/00, B65F 1/06

(54) **Verfahren zum Verpacken von zu entsorgendem Gut wie beispielsweise Hausmüll oder Speiseresten**

(30) Priorität: 12.06.1998 DE 19826082
(71) Anmelder: Tils, Peter, 52355 Düren (DE)
(72) Erfinder:
(74) Vertreter: Paul, Dieter-Alfred, Dipl.-Ing.

(57) **Zusammenfassung**

Die Erfindung betrifft ein Verfahren zum Verpacken von zu entsorgendem Gut wie Speiseresten, bei dem das Gut in einen Beutel eingefüllt und der befüllte Beutel verschlossen wird. Das Verfahren ist dadurch gekennzeichnet, daß auf das in dem Beutel eingefüllte Gut ein Kunststoff in flüssiger Form aufgebracht wird, der nach einer Härtung einen das Gut bedeckenden Kunststoffilm bildet.

## Beschreibung

Die vorliegende Erfindung betrifft ein Verfahren von zu entsorgendem Gut wie beispielsweise Speiseresten, bei dem das Gut in einen Beutel eingefüllt und der befüllte Beutel verschlossen wird.

Im Rahmen der Müllentsorgung ist heute in vielen Gemeinden vorgeschrieben, daß in den Haushalten eine Müllsortierung vorgenommen wird, wobei im allgemeinen eine Dreifachtrennung nach Bioabfällen, Kunststoffen und sonstigen Abfällen erfolgt. Aus der WO 97/03899 ist insbesondere ein Verfahren zum Sammeln und Entsorgen von Abfällen bekannt, bei dem der Abfall in den Haushalten nach Wertstoffrückführungskriterien getrennt in Folienbehältnissen unter Vakuum verpackt wird. Die Folienbehältnisse sind ihren Inhaltsstoffen nach gekennzeichnet, so daß sie ungeordnet beispielsweise in einer Mülltonne zwischengelagert und zur Mülldeponie verfahren werden können, wo sie zur Endlagerung und/oder weiteren Verwertung wieder voneinander getrennt werden.

Das bekannte Verfahren hat sich in der Praxis durchaus bewährt, da durch das portionsweise Verschweißen des Mülls in Beuteln auf zuverlässige Weise sichergestellt werden kann, daß es nicht zu Verunreinigungen des Mülls durch Sporen, Bakterien, Maden etc. und auch nicht zu unangenehmen Geruchsbildungen kommen kann.

Das portionsweise Verpacken stößt allerdings auf Schwierigkeiten, wenn mit Keimen, Bakterien, Sporen etc. kontaminierte Stoffe entsorgt werden sollen, da die Vakuumierungsvorrichtung zum Evakuieren der Beutel dann mit einer Filtereinrichtung versehen sein muß, die verhindert, daß die Kontaminierung an die Umgebung gelangt. Selbst wenn eine Filtereinrichtung vorhanden ist, besteht noch die Problematik, daß die Luftführungskanäle der Vakuumierungsvorrichtung vor der Filtereinrichtung mit den Keimen bzw. Bakterien und dergleichen kontaminiert werden, was nicht tragbar ist. Schließlich ist eine Evakuierung nur solange möglich, wie feste Stoffe verpackt werden. Bei flüssigem Gut besteht nämlich die Gefahr, daß die Flüssigkeit durch den erzeugten Unterdruck in die Vakuumierungsvorrichtung gezogen wird, so daß diese verschmutzen und funktionsunfähig werden kann.

Aufgabe der Erfindung ist es daher, ein Verfahren anzugeben, mit dem auch flüssige oder kontaminierte Güter zuverlässig so verpackt werden können, daß es nicht zu unangenehmen Geruchsbildungen kommen kann und des weiteren die Umgebung durch die Kontaminierung nicht belastet wird.

Diese Aufgabe ist erfindungsgemäß dadurch gelöst, daß auf das in den Beutel eingefüllte Gut ein Kunststoff in flüssiger Form aufgebracht wird, der nach einer Härtung einen das Gut bedeckenden Kunststoffilm bildet. Diese Ausgestaltung eröffnet die Möglichkeit, das in einen Beutel eingefüllte Gut jeweils portionsweise durch Aufbringung eines Kunststoffilms bzw. einer Kunststoffschicht, die vorzugsweise elastisch ist, zu verpacken. In einem Standardmüllbeutel, wie er heute üblicherweise verwendet wird, kann damit das zu entsorgende Gut unmittelbar nach dem Einbringen durch einen Kunststoffilm verpackt werden, so daß auf zuverlässige Weise verhindert wird, daß es zu unangenehmen Geruchsbildungen kommt und die Keime, Sporen, Bakterien etc., mit denen das zu entsorgende Gut kontaminiert ist, an die Umgebung gelangen. In umgekehrter Weise wird außerdem verhindert, daß von außen Bakterien etc. zu dem Füllgut gelangen.

Die Portionen von zu entsorgendem Gut, die durch den Kunststoffilm verpackt werden, können dabei unterschiedlich groß sein, und der verwendete Beutel kann ohne die Gefahr von irgendwelchen Geruchsbildungen oder dergleichen vollständig gefüllt werden, so daß kein Beutelmaterial verschwendet wird.

Je nach Anwendungsfall können unterschiedliche Kunststoffe verwendet werden, mit denen das Gut dann anforderungsgerecht beispielsweise luftdicht, fluiddicht, keimdicht etc. verschlossen werden kann. Insbesondere ist vorgesehen, daß ein biologisch abbaubarer Kunststoff in flüssiger Form verwendet wird.

Dem Kunststoff können auch weitere Stoffe zugemischt sein. Beispielsweise kann der Kunststoff Desinfektionsmittel oder Tenside enthalten, um die Kontaminierung des verpackten Guts zu neutralisieren. Auch kann der Kunststoff beispielsweise ätherische Öle enthalten, so daß der Kunststoffilm einen angenehmen Geruch verbreitet. Alternativ oder zusätzlich kann dem Kunststoff auch Schwefel beigemischt sein, um Ungeziefer fernzuhalten, oder Haftmittel, um die Haftung des Kunststoffilms an der Beutelinnenseite zu verbessern. Auch kann der Kunststoff einen Farbstoff enthalten, durch den beispielsweise die Art des verpackten Guts gekennzeichnet werden kann.

Schließlich kann der Kunststoff beispielsweise auch Enzyme enthalten, welche den Rotteprozeß des verpackten Guts unterstützen oder auch den Zersetzungsprozeß des Kunststoffes steuern.

Der flüssige Kunststoff wird zweckmäßigerweise auf das in den Beutel eingefüllte Gut aufgesprüht, jede andere Art der Aufbringung ist jedoch auch denkbar.

In Ausbildung der Erfindung ist vorgesehen, daß der Beutel mit dem eingefüllten Gut während oder nach jedem Füllvorgang durch eine Wiegevorrichtung gewogen wird und der Beutel automatisch verschlossen, beispielsweise verschweißt wird, wenn ein vorgegebenes oder vorgebbares Beutelgewicht von der Wiegevorrichtung erfaßt wird. Durch dieses automatische Verschließen des Beutels wird sichergestellt, daß das Beutelgewicht nicht so hoch werden kann, daß der Beutel reißt. Außerdem wird die Handhabung für den Anwender deutlich vereinfacht.

In Ausbildung dieser Ausführungsform kann weiterhin vorgesehen sein, daß die Meßergebnisse der Wiegevorrichtung in einer Auswerteeinheit gespeichert und/oder zur Erfassung eines Gesamtgewichts von einer Mehrzahl von verschlossenen Beutel verarbeitet werden. Hierdurch wird auf einfache Weise die Möglichkeit geschaffen, die Kosten für die Müllentsorgung gewichtsbezogen zu berechnen, indem die Daten aus der Auswerteeinheit von dem Entsorgungsunternehmen ausgewertet werden, was beispielsweise auch über Datenfernübertragung geschehen kann. Wenn eine Abfrage über Datenfernübertragung vorgesehen ist, besteht außerdem die Möglichkeit, bedarfsorientiert Müllfahrzeuge zu den Verbrauchern zu schicken, wenn ein bestimmtes Müllgesamtgewicht erreicht ist.

Die Beutel können auch aus einer Schlauchfolie in dem Verpackungsgerät hergestellt werden. Hierdurch wird die Möglichkeit eröffnet, unterschiedlich große Beutel herzustellen und damit die Beutelgröße an die Menge von zu entsorgendem Gut anzupassen.

Zur Aufbringung des Kunststoffilms kann eine Sprühdose mit einem Behälter verwendet werden, der in bekannter Weise eine verschließbare Auslaßöffnung aufweist, die mit einer Düse verbunden ist. Die Sprühdose ist dann erfindungsgemäß dadurch gekennzeichnet, daß der Behälter mit flüssigem Kunststoff gefüllt ist und ein weiterer, Lösungsmittel enthaltender Behälter vorgesehen ist, der mit der Düse verbindbar ist, um zusätzlich und/oder alternativ zu dem flüssigen Kunststoff das Lösungsmittel der Düse zuzuführen und durch diese zu versprühen. Die erfindungsgemäße Sprühdose umfaßt somit wie jede herkömmliche Sprühdose einen Behälter, welcher das zu versprühende Gut - den flüssigen Kunststoff - enthält. Das in dem weiteren Behälter vorgesehene Lösungsmittel ist vorgesehen, um vor und/oder nach jedem Versprühen des Lösungsmittels die Düse zu reinigen. Zusätzlich oder alternativ kann dem flüssigen Kunststoff auch während des Versprühens Lösungsmittel beigemischt werden, um den Kunststoff zu verdünnen. Zweckmäßigerweise ist dabei der Düse ein Verteilerventil vorgeschaltet, um die Behälter alternativ oder gemeinsam mit der Düse zu verbinden.

Wenn die Düse in herkömmlicher Weise in einem Sprühkopf angeordnet ist, durch dessen Bewegung die Sprühdose betätigt wird, ist zweckmäßigerweise das Verteilerventil ebenfalls durch Bewegung des Sprühkopfes betätigbar. Bei herkömmlichen Sprühdosen wird üblicherweise der Sprühkopf gedrückt, um die Leitung zwischen dem Behälter und der Düse freizugeben. In diesem Fall wird die Verbindung zu dem Lösungsmittel enthaltenden Behälter zweckmäßigerweise in einer ersten Ventilstellung, in der der Sprühkopf nur leicht niedergedrückt ist, hergestellt und die Verbindung zum Kunststoffbehälter unterbrochen gehalten, und wird die Verbindung zu dem Kunststoff enthaltenen Behälter hergestellt und die Verbindung zum Lösungsmittel enthaltenden Behälter unterbrochen, wenn der Sprühkopf weiter niedergedrückt wird. Hierdurch wird erreicht, daß vor und nach jedem Versprühen von Kunststoff Lösungsmittel durch die Düse geführt wird und diese hierdurch gereinigt wird. Zusätzlich kann noch eine dritte Sprühstellung vorgesehen sein, in der der Sprühkopf dann noch weiter hinuntergedrückt ist und beide Behälter gleichzeitig mit der Düse verbunden sind.

Alternativ kann auch vorgesehen sein, das Verteilerventil durch eine Schwenkbewegung des Sprühkopfes zu betätigen.

In Ausbildung der erfindungsgemäßen Sprühdose ist vorgesehen, daß der das Lösungsmittel enthaltende Behälter kleiner als der den Kunststoff enthaltende Behälter ausgebildet ist. Hierdurch wird dem Umstand Rechnung getragen, daß üblicherweise weniger Lösungsmittel versprüht wird als Kunststoff.

Der das Lösungsmittel enthaltende Behälter kann auch lösbar an dem Kunststoff enthaltenden Behälter angebracht sein. Hierdurch wird das Problem beseitigt, daß meistens ein Behälter vor dem anderen leer sein wird. Wenn beispielsweise der Lösungsmittelbehälter leer ist, aber der Kunststoffbehälter noch teilweise gefüllt ist, kann der Lösungsmittelbehälter ausgetauscht und der Kunststoff vollständig aufgebraucht werden. Lösungsmittel und Kunststoff können somit jeweils bedarfsgerecht verwendet werden, ohne daß irgendwelche Reste übrigbleiben.

Die lösbare Anbringung des Lösungsmittel enthaltenden Behälters bietet weiterhin die Möglichkeit, Lösungsmittel zu verwenden, denen unterschiedliche Farbstoffe beigemischt sind, um über die Farbgebung kenntlich zu machen, welche Art von Abfall in einem Beutel verpackt worden ist.

Hinsichtlich weiterer vorteilhafter Ausgestaltungen der Erfindung wird auf die Unteransprüche sowie die nachfolgende Beschreibung von Ausführungsbeispielen unter Bezugnahme auf die beiliegende Zeichnung verwiesen. In der Zeichnung zeigt
- Figur 1: eine Ausführungsform eines Verpackungsgeräts zur Durchführung des erfindungsgemäßen Verfahrens im Längsschnitt,
- Figur 2: das Verpackungsgerät aus Figur 1 während des Verschließens eines gefüllten Müllbeutel, und
- Figur 3: eine Sprühdose zum Aufbringen eines Kunststoffilms gemäß der vorliegenden Erfindung.

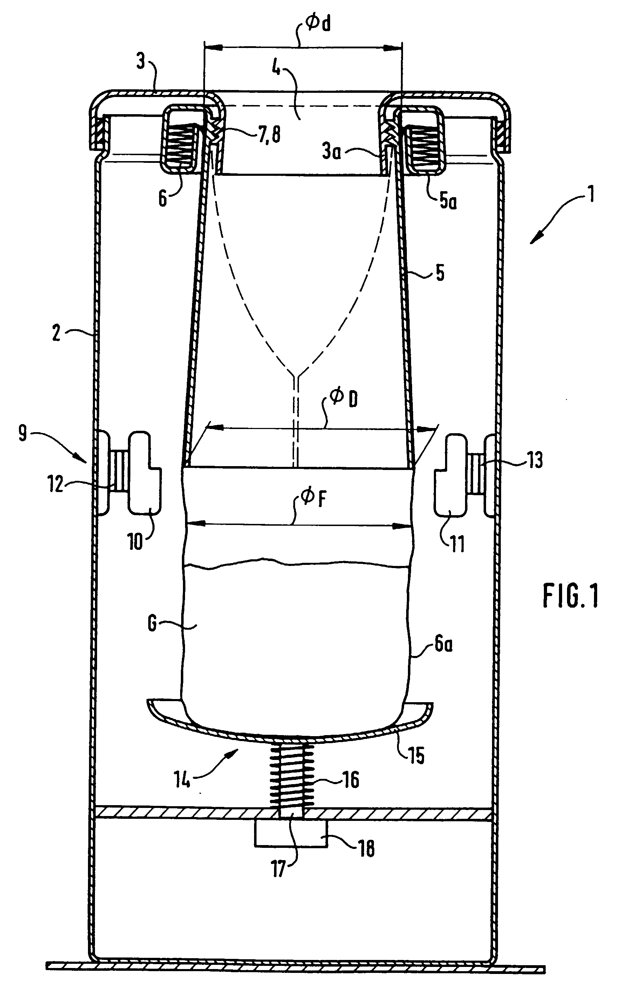

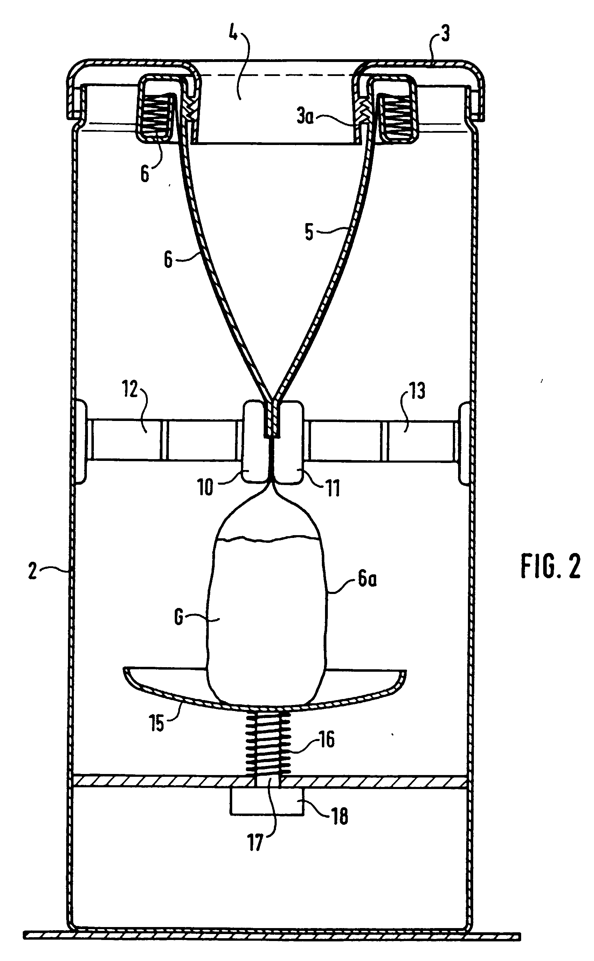

In den Figuren 1 und 2 ist eine Ausführungsform eines Verpackungsgeräts zur Durchführung des erfindungsgemäßen Verfahrens dargestellt. Das Verpackungsgerät 1 umfaßt ein Gehäuse 2, das an seiner offenen Oberseite durch einen Deckel 3 verschlossen ist. Der Deckel 3 weist mittig eine runde Öffnung 4 auf, die von einem sich in den Gehäuseinnenraum erstreckenden Ringsteg 3a des Deckels 3 definiert ist. An der Außenseite des Ringstegs 3a ist eine konusförmige Halterung 5 angebracht, an der eine Schlauchfolie 6 in geraffter Form gehalten ist. Die Halterung 5 weist an ihrem oberen Ende eine ringförmige Aufnahme 5a auf, in welche die Schlauchfolie 6 eingelegt ist. Der kleinere Außendurchmesser d am oberen Ende der Halterung 5 ist kleiner als der Innendurchmesser der Schlauchfolie 6, und der größere Außendurchmesser D am unteren Ende der Halterung 5 ist größer als der Durchmesser F der Schlauchfolie 6 gewählt, so daß die Schlauchfolie 6 nicht über das untere Ende der Halterung 5 rutscht, aber durch eine Bedienungsperson über das untere Ende von der Halterung 5 abgezogen werden kann.

In der dargestellten Ausführungsform ist die Halterung 5 am Deckel 3 festgeschraubt, wozu an der Innenfläche der Halterung 5 und an der Außenfläche des Ringstegs 3a jeweils Gewinde 7, 8 vorgesehen sind.

Unterhalb der konusförmigen Halterung 5 für die Schlauchfolie 6 ist eine Schweißeinrichtung 9 vorgesehen, die in dem dargestellten Ausfürungsbeispiel über eine Steuerungseinrichtung betätigbar ist, aber auch manuell betätigbar sein kann. Die Schweißeinrichtung 9 umfaßt zwei Schweißbacken 10, 11, die einander gegenüberliegend an der Innenwand des Gehäuses 2 durch Teleskoparme 12, 13 angebracht sind, durch die sie aufeinander zu und voneinander weg bewegt werden können, um sie zwischen der in Figur 1 dargestellten inaktiven Stellung oder der in Figur 2 dargestellten Schweißstellung zu verstellen. An den Schweißbacken 10, 11 sind Heizdrähte vorgesehen, die in der Figur 2 dargestellten Schweißstellung zusammenwirken, um Schweißnähte an der Schlauchfolie 6 herzustellen. Anstelle der Heizdrähte können auch beispielsweise Lichtschweißeinrichtungen vorgesehen sein.

Unterhalb der Schweißeinrichtung 9 ist eine Wiegevorrichtung 14 vorgesehen, die eine Auflageschale 15 aufweist, welche am Gehäuseboden durch eine Schraubendruckfeder 16 abgestützt ist. Die Auflageschale 15 weist an ihrer Unterseite einen Fortsatz 17 auf, der mit einem Näherungsschalter 18 am Gehäuseboden zusammenwirkt, um ein Signal an die Steuerungseinrichtung für die Schweißeinrichtung zu senden, wenn sich die Auflageschale 15 um eine vorgegebene Strecke abgesenkt hat. Wenn die Steuerungseinrichtung ein solches Signal empfängt, sendet sie wiederum ein Signal an die Schweißeinrichtung 9, um diese zu betätigen.

Im Betrieb wird die Schlauchfolie 6 von der konusförmigen Halterung 5 nach unten über den großen Außendurchmesser D abgezogen. Anschließend wird das untere Ende der Schlauchfolie 6 durch Betätigung der Schweißeinrichtung zugeschweißt, um einen Beutel 6a zu bilden. Hierzu werden die Schweißbacken 10, 11 aus der in Figur 1 dargestellten Stellung in die in Figur 2 dargestellte Schweißstellung gebracht, indem die Teleskoparme 12, 13 ausgefahren werden, und die Heizdrähte erhitzt. Der so hergestellte Beutel 6a kann vom oberen Ende der Halterung her durch die Öffnung 4 im Deckel mit Speiseresten, Müll G oder dergleichen befüllt werden, ohne daß er von Hand aufgehalten werden muß. Durch das Gewicht des eingefüllten Guts senkt sich dabei die Auflageschale 15, auf welche der Beutel 6a aufliegt, immer weiter ab, bis der Fortsatz 17 am unteren Ende der Auflageschale mit dem Näherungsschalter 18 am Gehäuseboden Kontakt bildet, so daß dieser reagiert und ein Signal an die Steuerungseinrichtung abgibt, welche wiederum die Schweißeinrichtung 9 betätigt, um das obere Ende des Beutels 6a zu verschließen. Hierzu werden wiederum die beiden Teleskoparme 12, 13 ausgefahren, so daß die Schweißbacken 10, 11 aus der in Figur 1 dargestellten Stellung aufeinander zu in die in Figur 2 dargestellte Schweißstellung bewegt werden. Das untere Ende der Halterung 5 ist dabei so elastisch nachgiebig ausgebildet und so geformt, daß die Halterung 5 durch die Schweißbacken 10, 11 zusammengedrückt wird, wenn sich diese in die Schweißstellung begeben, und sich der Rand unter Bildung einer geraden Linie flach aufeinanderlegt. Hierdurch wird erreicht, daß sich auch die Folie aufeinanderlegt, so daß der gefüllte Beutel 6a durch die Schweißeinrichtung 9 sauber zugeschweißt werden kann. Anschließend kann der gefüllte und verschlossene Beutel 6a vom Rest der Schlauchfolie 6 abgeschnitten und ein neuer Beutel in der zuvor beschriebenen Weise hergestellt werden.

Gemäß einer bevorzugten Ausführungsform der Erfindung wird durch die Schweißeinrichtung jedoch beim Verschließen des oberen Endes des Beutels 6a eine Doppelnaht hergestellt und der Beutel 6a zwischen den beiden Schweißnähten abgetrennt, so daß die zuerst hergestellte obere Schweißnaht den Boden des nächsten Beutels bildet. Hierdurch kann ein Schweißschritt bei der Herstellung des Beutels gespart werden.

Das von der Wiegevorrichtung 14 erfaßte Gewicht des gefüllten und verschlossenen Beutels 6a wird in der Steuerungseinrichtung gespeichert. Aufgrund des Meßergebnisses der Wiegevorrichtung 14 und benutzerbezogenen Daten, die in der Steuerungseinrichtung gespeichert sind, wird ein Lieferschein erstellt, der über eine nicht dargestellte Druckeinrichtung ausgegeben wird. Der Lieferschein kann beispielsweise als Barcode vorgesehen sein, der auf ein Selbstklebeetikett aufgedruckt und an dem Beutel 6a befestigt wird. Alternativ kann der Barcode auch direkt auf den Beutel 6a aufgedruckt werden.

Es ist nicht unbedingt erforderlich, für jeden Beutel 6a einen Lieferschein zu drucken. Alternativ können auch die Gewichte von mehreren nacheinander befüllten Beuteln 6a in der Steuerungseinrichtung gespeichert werden, wobei dann für diese Behältnisse ein gemeinsamer Lieferschein erstellt wird. Auch kann auf diese Weise das Gesamtgewicht von mehreren befüllten Beuteln 6a ermittelt werden, auf dessen Grundlage dann beispielsweise die Kosten für die Müllentsorgung berechnet werden können.

Zusätzlich zu der vorgesehenen Wiegevorrichtung kann auch eine weitere Vorrichtung vorgesehen sein, welche im Füllstand von in den Beutel 6a eingefülltem Gut G, insbesondere in maximalem Füllstand des Beutels 6a, überwacht und die Schweiß-einrichtung 9 betätigt, wenn ein vorgegebener Füllstand erreicht ist, und zwar insbesondere unabhängig davon, ob das vorgegebene Maximalgewicht erreicht ist. Durch diese Ausbildung wird der Beutel 6a auch dann automatisch verschlossen, wenn beispielsweise leichtes, aber sperrige Stückgut in den Beutel 6a eingefüllt wird.

Bei dem beschriebenen Verfahren kann es eine Zeitlang dauern, bis der Beutel 6a soweit gefüllt ist, daß die Schweißeinrichtung 9 zum Verschließen des Beutels 6a betätigt wird. Um in dieser Zeit zu verhindern, daß Keime, Bakterien, Sporen oder dergleichen, die das Gut G kontaminieren, aus dem Beutel austreten, bzw. daß in umgekehrter Weise Bakterien etc. zu dem eingefüllten Gut G gelangen können, ist erfindungsgemäß vorgesehen, daß auf das in dem Beutel 6a eingefüllte Gut G ein Kunststoff in flüssiger Form aufgebracht, beispielsweise aufgesprüht wird, der nach einer Härtung einen das Gut G bedeckenden Kunststoffilm bildet und das Gut G abschließt. Der Kunststoffilm verschließt somit in der gewünschten Weise den mit Gut G befüllten Beutelabschnitt so, daß die Kontaminierung nicht entweichen kann und es nicht zu Geruchsbildungen kommt. Auf diese Weise können in einem Beutel mehrere Portionen von zu entsorgendem Gut G gesammelt werden, die dann jeweils einzeln nach dem Einbringen in den Beutel durch einen Kunststoffilm verschlossen werden. Geruchsbildungen und Kontaminierungen können somit auf sichere Weise verhindert werden. Der Kunststoffilm ist zweckmäßigerweise elastisch, um Beschädigungen des Films vorzubeugen.

In vorteilhafter Weise können dem Kunststoff Zusatzstoffe beigemischt sein, welche die durch den Kunststoffilm angestrebten Zwecke noch unterstützen. Beispielsweise kann der Kunststoff ein Desinfektionsmittel enthalten, welches in dem zu entsorgenden Gut G enthaltene Keime, Bakterien etc. abtötet. In gleicher Weise können auch Tenside in dem Kunststoff enthalten sein.

Dem Kunststoff können auch ätherische Öle beigemischt sein, so daß durch das Aufbringen des Kunststoffes nicht nur unangenehme Geruchsbildungen verhindert werden, sondern auch ein für den Benutzer angenehmer Duft verbreitet wird.

Zum Abtöten und Fernhalten von Ungeziefer kann dem Kunststoff weiterhin Schwefel beigemischt sein, außerdem kann der Kunststoff ein Haftmittel enthalten, welches das Anhaften des Kunststoffilms an der Beutelinnenseite unterstützt.

Des weiteren kann es zweckmäßig sein, dem Kunststoff einen Farbstoff beizumischen. Durch die Farbgebung des Kunststoffes kann damit gekennzeichnet werden, welche Art von zu entsorgendem Gut G in den Beutel eingefüllt ist.

Der Kunststoff kann außerdem Enzyme enthalten, welche den Zersetzungsprozeß des eingefüllten Guts bzw. auch des biologisch abbaubaren Kunststoffes steuern.

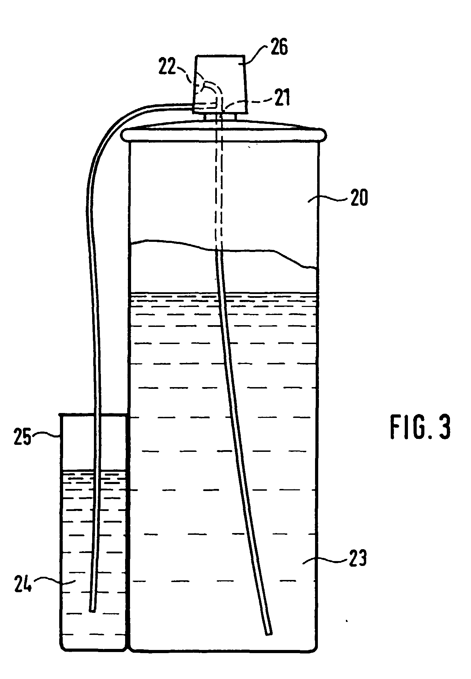

Der flüssige Kunststoff wird vorzugsweise auf das in dem Beutel eingefüllte Gut aufgesprüht. Hierzu kann beispielsweise eine Sprühdose verwendet werden, wie sie in Figur 3 dargestellt ist. Die Sprühdose hat im wesentlichen den gleichen Grundaufbau wie herkömmliche Sprühdosen für Haarspray etc. mit einem Behälter 20, der an seiner Oberseite eine durch ein Ventil verschließbare Auslaßöffnung 21 in Form eines nach oben über den Behälter 20 überstehenden Nippels aufweist, und einem Sprühkopf 26, der auf den Nippel aufgesteckt und mit einer Düse 22 versehen ist. Der Behälter 20 enthält als Sprühgut flüssigen Kunststoff 23, dem ein Treibmittel beigefügt ist, um den zum Versprühen notwendigen Druck zu erzeugen. Alternativ kann auch in ebenfalls bekannter Weise eine Pumpe vorgesehen sein, über die im Behälter 20 ein Überdruck erzeugt werden kann.

Erfindungsgemäß ist an der Außenseite des Behälters 20 ein kleinerer, Lösungsmittel 24 enthaltender Behälter 25 angebracht, der ebenfalls mit der Düse 22 verbindbar ist, um zusätzlich und/oder alternativ zu dem flüssigen Kunststoff 23 das Lösungsmittel 24 der Düse 22 zuzuführen und durch diese zu versprühen. Hierdurch wird die Möglichkeit geschaffen, die Düse 22 vor und/oder nach jedem Versprühen von Kunststoff 23 mit dem Lösungsmittel zu reinigen bzw. bei gleichzeitigem Versprühen mit dem Kunststoff diesen zu verdünnen.

Zur Verbindung der Düse 22 mit den Behältern 20, 25 ist ein Verteilerventil vorgesehen, das durch Niederdrücken des Sprühkopfes 26 aus einer Schließstellung in verschiedene Öffnungsstellungen bringbar ist. In einer ersten Stellung, in der der Sprühkopf 26 nur leicht niedergedrückt ist, wird eine Verbindung zum Lösungsmittelbehälter 25 hergestellt und die Verbindung zum Kunststoffbehälter 20 unterbrochen, und in einer zweiten Stellung, in der der Sprühkopf 26 weiter niedergedrückt ist, wird eine Verbindung zum Kunststoffbehälter 20 hergestellt und die Verbindung zum Lösungsmittelbehälter 25 unterbrochen. Durch diese Ausgestaltung wird erreicht, daß vor und nach jedem Versprühen von Kunststoff die Düse 22 zwangsläufig gereinigt wird, da beim Niederdrücken des Sprühkopfes 26 zum Erreichen der zweiten Stellung und später beim Loslassen des Sprühkopfes 26 immer die erste Stellung durchlaufen werden muß, in der die Düse 22 mit dem Lösungsmittelbehälter 25 verbunden ist.

Zusätzlich ist eine dritte Ventilstellung vorgesehen, die erreicht wird, wenn der Sprühkopf 26 über die zweite Stellung hinaus vollständig niedergedrückt wird. In dieser dritten Stellung ist die Düse 22 mit beiden Behältern 20, 25 gleichzeitig verbunden, so daß der versprühte Kunststoff durch das Lösungsmittel verdünnt wird.

Der Lösungsmittelbehälter 25 ist lösbar am Kunststoffbehälter 20 angebracht. Dies hat den Vorteil, daß jeder Behälter 20, 25 einzeln ausgetauscht werden kann, wenn er leer ist. Außderdem wird die Möglichkeit geschaffen, dem Lösungsmittel Farbstoffe zuzumischen, so daß durch unterschiedlich farbige Lösungsmittel die verschiedenen Müllarten gekennzeichnet werden können. In diesem Fall kann jeweils ein Behälter mit Lösungsmittel in der gewünschten Farbe am Kunststoffbehälter 20 angebracht werden.

## Patentansprüche

1. Verfahren zum Verpacken von zu entsorgendem Gut (G) wie Speiseresten, bei dem das Gut (G) in einen Beutel (6a) eingefüllt und der befüllte Beutel (6a) verschlossen wird, dadurch gekennzeichnet, daß auf das in den Beutel (6a) eingefüllte Gut (G) ein Kunststoff, insbesondere ein biologisch abbaubarer Kunststoff, in flüssiger Form aufgebracht wird, der nach einer Härtung einen das Gut (G) bedeckenden Kunststoffilm bildet.

2. Verfahren nach Anspruch 1, dadurch gekennzeichnet, daß in einem Beutel jeweils mehrere Portionen von zu entsorgendem Gut (G) gesammelt werden und auf jede Portion ein Kunststoffilm aufgebracht wird.

3. Verfahren nach Anspruch 1 oder 2, dadurch gekennzeichnet, daß ein Kunststoff verwendet wird, der Desinfektionsmittel und/oder Tenside und/oder ätherische Öle und/oder Schwefel und/oder ein Haftmittel und/oder einen Farbstoff und/oder Enzyme enthält.

4. Verfahren nach einem der vorhergehenden Ansprüche,dadurch gekennzeichnet, daß der flüssige Kunststoff auf das in den Beutel (6a) eingefüllte Gut (G) aufgesprüht wird.

5. Verfahren nach einem der vorhergehenden Ansprüche, dadurch gekennzeichnet, daß der Beutel (6a) mit der wenigstens einen eingefüllten und mit einem Kunststoffilm bedeckten Portion von zu entsorgendem Gut (G) zugeschweißt wird.

6. Verfahren nach einem der vorhergehenden Ansprüche, dadurch gekennzeichnet, daß der Beutel (6a) mit dem eingefüllten Gut (G) während oder nach jedem Füllvorgang durch eine Wiegevorrichtung (14) gewogen wird und der Beutel (6a) automatisch verschlossen wird, wenn ein vorgegebenes oder vorgebbares Beutelgewicht von der Wiegevorrichtung (14) erfaßt wird.

7. Verfahren nach Anspruch 6, dadurch gekennzeichnet, daß die Meßergebnisse der Wiegevorrichtung (14) in einer Auswerteeinheit gespeichert und/oder zur Erfassung eines Gesamtgewichts von einer Mehrzahl von gefüllten und verschlossenen Beuteln verarbeitet werden.

8. Sprühdose mit einem Behälter (20), der eine verschließbare Auslaßöffnung (21) aufweist, die mit einer Düse (22) verbunden ist, dadurch gekennzeichnet, daß der Behälter (20) mit flüssigem Kunststoff (23) gefüllt ist und ein weiterer, Lösungsmittel (24) enthaltender Behälter (25) vorgesehen ist, der mit der Düse (22) verbunden ist, um zusätzlich und/oder alternativ zu dem flüssigen Kunststoff das Lösungsmittel (24) der Düse (22) zuzuführen und durch diese zu versprühen.

9. Sprühdose nach Anspruch 8, dadurch gekennzeichnet, daß der Düse (22) ein Verteilerventil vorgeschaltet ist, um die Behälter (20, 25) alternativ oder gemeinsam mit der Düse (22) zu verbinden.

10. Sprühdose nach Anspruch 9, dadurch gekennzeichnet, daß die Düse (22) in einem Sprühkopf (26) angeordnet ist und das Verteilerventil durch Bewegung des Sprühkopfes (26) betätigbar ist.

11. Sprühdose nach einem der Ansprüche 8 bis 10, dadurch gekennzeichnet, daß der das Lösungsmittel (24) enthaltende Behälter (25) kleiner als der den Kunststoff (23) enthaltende Behälter (20) ausgebildet ist.

12. Sprühdose nach einem der Ansprüche 8 bis 11,dadurch gekennzeichnet, daß der das Lösungsmittel (24) enthaltende Behälter (25) lösbar an dem Behälter (20), welcher den flüssigen Kunststoff (23) enthält, angebracht ist.

13. Sprühdose nach einem der Ansprüche 8 bis 12, dadurch gekennzeichnet, daß dem Lösungsmittel (24) ein Farbstoff beigemischt ist.
